# EUROPEAN PATENT SPECIFICATION

(11) **EP 3 041 170 B1**
(45) Date of publication and mention of the grant of the patent: **25.10.2017**
(21) Application number: 13894115.8
(22) Date of filing: 30.09.2013
(51) Int. Cl.: H04L 12/24

(54) **NETWORK PLANNING METHOD AND DEVICE**
NETZWERKPLANUNGSVERFAHREN UND -VORRICHTUNG
PROCÉDÉ ET DISPOSITIF DE PLANIFICATION RÉSEAU

(43) Date of publication of application: 06.07.2016
(73) Proprietor: Huawei Technologies Co., Ltd., Longgang District Shenzhen, Guangdong 518129 (CN)
(72) Inventor: WU, Chuanjun, Shenzhen Guangdong 518129 (CN); SUI, Zhicheng, Shenzhen Guangdong 518129 (CN); LIU, Xinchao, Shenzhen Guangdong 518129 (CN)
(74) Representative: Goddar, Heinz J.
(86) International application number: PCT/CN2013/084710
(87) International publication number: WO 2015/042952

(56) References cited:
- CN-A- 101 052 235
- CN-A- 101 651 598
- CN-A- 102 325 070
- US-A1- 2006 002 310
- US-A1- 2009 003 211
- US-A1- 2009 274 067
- US-A1- 2011 150 470
- CHEYNS J ET AL: "Upgrade scenarios for OPS networks", OPTICAL NETWORK DESIGN AND MODELING, 2005. CONFERENCE ON MILAN, ITALY FEB. 7-9, 2005, PISCATAWAY, NJ, USA,IEEE, 7 February 2005 (2005-02-07), pages 27-39, XP010793129, ISBN: 978-0-7803-8957-1
- MEZHOUDI M ET AL: "NETWORK SERVICE PROVIDERS: PRACTICAL CONSIDERATIONS FOR OPTICAL NETWORK PLANNING", BELL LABS TECHNICAL JOURNAL, WILEY, CA, US, vol. 11, no. 2, 21 June 2006 (2006-06-21), pages 145-155, XP001245456, ISSN: 1089-7089, DOI: 10.1002/BLTJ.20166

## Description

### TECHNICAL FIELD

The present invention relates to the field of communications, and in particular, to a network planning method and device.

### BACKGROUND

In an actual network operation, a network service provider performs network planning for a specific time range according to a life cycle of a device and based on prediction on future service traffic.

Services of each phase are aggregated manually first, and then network planning is performed for the aggregated services by invoking a network planning tool. Manual intervention can only implement an end-to-end network traffic grooming (Grooming) operation. However, for a complex scenario in which it is required to interrupt aggregation in the middle, it is difficult to perform processing manually, but in an optical transport network (Optical Transport Network, OTN), it is generally required to interrupt aggregation in the middle. For an actual network, if manual aggregation is performed to achieve an objective of relative balance between costs of phases, only simple optimization can be achieved, and a network planning effect is not good.

In addition, a global optimization version may be preset, and a network planning result of the global optimization version is used as reference data. Network planning for each phase is completed by using an incremental approach, to obtain a network planning result. The network planning result of the preset global optimization version is compared with a network planning result obtained after network planning for each phase is completed. If a difference between the network planning result of the phase and the network planning result of the preset global optimization version is within a range, for example, 0% to 5%, the network planning result of the phase can be accepted. If the difference between the network planning result of the phase and the network planning result of the preset global optimization version exceeds a range, the network planning result of the phase is analyzed, routing-constrained routing is set for some services, and phase-by-phase incremental planning is performed anew based on a set constraint. However, setting constraint routing for some services has a high requirement on an operator, because setting a constraint condition for planning by comparing with the network planning result of the preset global optimization version is a very complex process. The operator must be very familiar with the network planning tool and an effect of constraint modification on the network planning result, and even if the operator is very familiar with the network planning tool, network planning performed by using this method is a time-consuming effort and lacks generality, and for a network planning program, specific analysis needs to be performed. In addition, for a complex network, it is difficult for a person to think clearly, and a network planning effect is not good.

US 2006/002310 A1 discloses a method of automatically generating a computer based layout of an optical communication network. First, communications traffic demand forecast data for an optical communication network is received. Network data corresponding to a deployed optical communication network is also received. Thereafter, a network plan can be automatically generated. The network plan corresponds to a modified network that may be deployed. Also, the network plan can be derived from the network data. Further, the network plan can be constructed in response to the performance of a grooming operation that includes a first level of grooming at an optical level of the modified network and a second level of grooming at an electrical level of the modified network.

CH EYNS J ET AL: "Upgrade scenarios for OPS networks", OPTICAL NETWORK DESIGN AND MODELING, 2005. CONFERENCE ON MILAN, ITALY FEB. 7-9, 2005,PISCATAWAY, NJ, USA, IEEE, 7 February 2005, pages 27-39, discloses modular, multi-stage solutions for known OPS node designs.

### SUMMARY

An objective of the present invention is to provide a network planning method, to solve a problem that a planning effect of an existing network planning method is not good.
The present invention provides a network planning method according to claim 1 and a network planning device according to claim 3.

According to a first aspect, a network planning method is provided, where the method includes:
acquiring information about network planning services of multiple phases, where the information includes a bandwidth of each service of each phase;
grouping the network planning services of the multiple phases according to pre-configured grouping information, where the pre-configured grouping information includes information about a group to which a service of each phase belongs, and the services in a same group include services of at least one phase; and
performing first-time network traffic grooming planning on each group of network planning services after grouping, grouping remaining network planning services after grooming planning of each group into another group, and performing second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase.

With reference to the first aspect, in a first possible implementation manner of the first aspect, the performing first-time grooming planning on each group of network planning services after grouping includes:
in a case in which a group of network planning services are services of a same phase, performing grooming planning on the services in the same group; and
in a case in which a group of network planning services are services of different phases, performing grooming planning on services of a same phase separately.

With reference to the first possible implementation manner of the first aspect, in a second possible implementation manner of the first aspect, the in a case in which a group of network planning services are services of different phases, performing grooming planning on services of a same phase separately includes:
in a case in which a group of network planning services are services of different phases, first performing grooming planning separately on services of a same phase in the same group first;
when a total bandwidth of remaining network planning services in the same group after planning is greater than an integer multiple N of a preset capacity of the OCHs, performing grooming planning again on the remaining network planning services in the same group after planning, and for remaining network planning services that do not exceed the preset capacity of the OCHs, performing the steps of grouping remaining network planning services after grooming planning of each group into another group and performing second-time grooming planning on the remaining network planning services in the another group according to a preset optimization direction; and
when the total bandwidth of the remaining network planning services in the same group after planning is less than the preset capacity of the OCHs, performing the steps of grouping remaining network planning services after grooming planning of each group into another group and performing second-time grooming planning on the remaining network planning services in the another group according to a preset optimization direction.

According to a second aspect, a network planning device is provided, where the device includes:
an acquiring unit, configured to acquire information about network planning services of multiple phases, where the information includes a bandwidth of each service of each phase;
a grouping unit, configured to group the network planning services of the multiple phases according to pre-configured grouping information, where the pre-configured grouping information includes information about a group to which a service of each phase belongs, and the services in a same group include services of at least one phase; and
a planning unit, configured to perform first-time network traffic grooming planning on each group of network planning services after grouping, group remaining network planning services after grooming planning of each group into another group, and perform second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase.

With reference to the second aspect, in a first possible implementation manner of the second aspect, the planning unit is specifically configured to:
in a case in which a group of network planning services are services of a same phase, perform grooming planning on the services in the same group; and
in a case in which a group of network planning services are services of different phases, perform grooming planning on services of a same phase separately.

With reference to the first possible implementation manner of the second aspect, in a second possible implementation manner of the second aspect, in a case in which a group of network planning services are services of different phases, performing, by the planning unit, grooming planning on services of a same phase separately includes:
in a case in which a group of network planning services are services of different phases, first performing grooming planning separately on services of a same phase in the same group first;
when a total bandwidth of remaining network planning services in the same group after planning is greater than an integer multiple N of a preset capacity of the OCHs, performing grooming planning again on the remaining network planning services in the same group after planning, and for remaining network planning services that do not exceed the preset capacity of the OCHs, performing the steps of grouping remaining network planning services after grooming planning of each group into another group and performing second-time grooming planning on the remaining network planning services in the another group according to a preset optimization direction; and
when the total bandwidth of the remaining network planning services in the same group after planning is less than the preset capacity of the OCHs, performing the steps of grouping remaining network planning services after grooming planning of each group into another group and performing second-time grooming planning on the remaining network planning services in the another group according to a preset optimization direction.

Compared with the prior art, embodiments of the present invention provide a network planning method. The method includes: acquiring information about network planning services of multiple phases, where the information includes a bandwidth of each service of each phase; grouping the network planning services of the multiple phases according to pre-configured grouping information, where the pre-configured grouping information includes information about a group to which a service of each phase belongs, and the services in a same group include services of at least one phase; and performing first-time network traffic grooming planning on each group of network planning services after grouping, grouping remaining network planning services after grooming planning of each group into another group, and performing second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase. In this way, a quantity of obtained OCHs of each phase is more proportional to a quantity of services of each phase, and on condition that the quantity of the OCHs is the same, a later phase to which the OCHs belong indicates lower required costs because a price of a device keeps dropping, thereby reducing actual network establishment costs.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a network planning method according to an embodiment of the present invention;
FIG. 2 is a schematic diagram of a network planning method according to an embodiment of the present invention;
FIG. 3 is a schematic diagram of a network planning method according to an embodiment of the present invention;
FIG. 4 is a structural diagram of a network planning device according to an embodiment of the present invention; and
FIG. 5 is a structural diagram of a network planning device according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

The foregoing descriptions are merely exemplary embodiments of the present invention, but are not intended to limit the present invention.

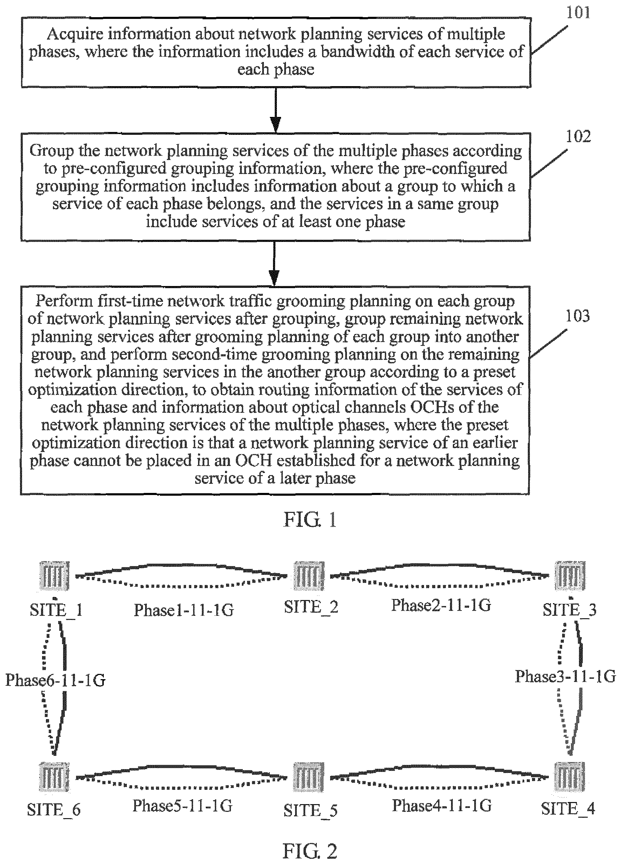

Referring to FIG. 1, FIG. 1 is a flowchart of a network planning method according to an embodiment of the present invention. As shown in FIG. 1, the method includes the following steps:
Step 101: Acquire information about network planning services of multiple phases, where the information includes a bandwidth of each service of each phase.

For each network planning service, a time of the service is pre-configured, and services whose configured times are the same are classified into a same phase. Phase is an attribute of each network planning service, and each network planning service belongs to only one phase. The information about the network planning services of the multiple phases includes source nodes and sink nodes (source Node and sink Node), bandwidths of the services, and phases to which the services belong.

Step 102: Group the network planning services of the multiple phases according to pre-configured grouping information, where the pre-configured grouping information includes information about a group to which a service of each phase belongs, and the services in a same group include services of at least one phase.

Specifically, each service has a phase field, and a value of the field indicates a phase to which the service belongs, that is, a time point at which the service needs to be configured. A grouping basis may be specified by using a configuration file, for example, services of a same phase belong to one group; and may also be changed by using a configuration file to specify which phases belong to one group, for example, it may be specified that services of phase 1 belong to one group, services of phases 2 and 3 belong to one group, and the rest phases belong to one group.

Whether one group includes services of multiple phases is determined by a configuration parameter in the configuration file, that is, which phases are grouped into one group may be configured by using the configuration parameter. For example, for grouping policy 1, services of each phase belong to one group; for grouping policy 2, services of every two phases belong to one group; and for grouping policy 3, the first phase belongs to one group, and the rest phases belong to one group. By controlling grouping by using the parameter, a grooming granularity of an algorithm can be controlled. For example, placing services of all phases in one group according to a grouping policy is actually similar to full planning, and a balancing effect is relatively poor; and if each phase is one group according to a grouping policy, a balancing effect is relatively good, but total costs are relatively high.

Step 103: Perform first-time network traffic grooming planning on each group of network planning services after grouping, group remaining network planning services after grooming planning of each group into another group, and perform second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase.

The network traffic grooming planning refers to performing an operation by aggregating small-granularity services into a big pipe, so as to reduce a quantity of required OCHs and reduce network costs. An optical channel OCH refers to a capacity of a wavelength provided on an optical path. One OCH not only occupies a wavelength resource, but also requires a pair of line boards. Line boards are prime costs of an OTN network device, and therefore, reducing a quantity of OCHs helps reduce network costs. As shown in FIG. 2, it is assumed that there is an optical channel OCH from a node SITE_1 to a node SITE_6, and routing of the optical channel is SITE_1-SITE_2-SITE_3-SITE_4-SITE_5-SITE_6. In the figure, a dotted line represents a service between nodes, and a solid line represents a physical link between nodes. Therefore, establishing an optical channel from SITE_1 to SITE_6 according to the routing information is disposing a pair of line boards at SITE_1 and SITE_6 separately and connecting SITE_1, SITE_2, SITE_3, SITE_4, SITE_5, and SITE_6 separately through cables.

Optionally, the performing first-time grooming planning on each group of network planning services after grouping includes:
in a case in which a group of network planning services are services of a same phase, performing grooming planning on the services in the same group; and
in a case in which a group of network planning services are services of different phases, perform grooming planning on services of a same phase separately.

In addition, in an actual application, for the case in which a group of network planning services are services of different phases, end-to-end aggregation may be performed first on services of a same phase in the same group, and then grooming planning is performed on a result of the aggregation.

Specifically, referring to FIG. 2, FIG. 2 is a schematic diagram of a network planning method according to an embodiment of the present invention. As shown in FIG. 2, FIG. 2 shows a ring network of six endpoints. The six endpoints are marked as SITE_1, SITE_2, SITE_3, SITE_4, SITE_5, and SITE_6 separately. A service between nodes is represented by a dotted line. Services between each two nodes are 11 services having traffic of a bandwidth capacity (gigabit, G). Services of each phase are marked as Phase n separately, for example, services of the first phase are marked as Phase 1. There are services of six phases in total in FIG. 2, and a pipe capacity of an underlying optical channel OCH is 10 G.

The present invention has two implementation manners. In a first implementation manner, each group includes services of multiple different phases, and in a second implementation manner, each group includes services of only one phase.

The first implementation manner is as follows:
The first step: Group services according to a phase to which each network planning service belongs. It is assumed that every two phases belong to one group and there are three groups in total, where a first group includes 22 services in total, namely, 11 services whose bandwidths are 1 G of the first phase and 11 services whose bandwidths are 1 G of the second phase; a second group includes 11 services whose bandwidths are 1 G of the third phase and 11 services whose bandwidths are 1 G of the fourth phase; and a third group includes 11 services whose bandwidths are 1 G of the fifth phase and 11 services whose bandwidths are 1 G of the sixth phase.
The second step: Perform Grooming planning on each group of services, and perform Grooming planning first on services of each phase in one group. In the first group, 10 services whose bandwidths are 1 G of the first phase are aggregated together, and OCH1 that belongs to the first phase is required; 10 services whose bandwidths are 1 G of the second phase are aggregated together, and OCH2 that belongs to the second phase is required; in this way, in the first group, a total of two OCHs, namely, OCH1 of the first phase and OCH2 of the second phase, can be obtained, and a total of two individual services of 1 G, namely, one service of 1 G of the first phase and one service of 1 G of the second phase, remain. In the second group, 10 services whose bandwidths are 1 G of the third phase are aggregated together, and OCH3 that belongs to the third phase is required; 10 services whose bandwidths are 1 G of the fourth phase are aggregated together, and OCH4 that belongs to the fourth phase is required; in this way, in the second group, a total of two OCHs, namely, OCH3 of the third phase and OCH4 of the fourth phase, can be obtained, and a total of two individual services of 1 G, namely, one service of 1 G of the third phase and one service of 1 G of the fourth phase, remain. In the third group, 10 services whose bandwidths are 1 G of the fifth phase are aggregated together, and OCH5 that belongs to the fifth phase is required; 10 services whose bandwidths are 1 G of the sixth phase are aggregated together, and OCH6 that belongs to the sixth phase is required; in this way, in the third group, a total of two OCHs, namely, OCH5 of the fifth phase and OCH6 of the sixth phase, can be obtained, and a total of two individual services of 1 G, namely, one service of 1 G of the fifth phase and one service of 1 G of the sixth phase, remain. A final planning result is: routing of the 10 services of 1 G in Phase1 is nodes SITE_1-SITE_2, and OCH1 is used; routing of the 10 services of 1 G in Phase2 is SITE_2-SITE_3, and OCH2 is used; routing of the 10 services of 1 G in Phase3 is SITE_3-SITE_4, and OCH3 is used; routing of the 10 services of 1 G in Phase4 is SITE_4-SITE_5, and OCH4 is used; routing of the 10 services of 1 G in Phase5 is SITE_5-SITE_6, and OCH5 is used; routing of the 10 services of 1 G in Phase6 is SITE_6-SITE_1, and OCH6 is used; and one service of 1 G remains in each phase, and two services of 1 G remain in each group.
The third step: Group the two remaining individual services of 1 G of each phase in each group into one group, and perform hybrid optimization on the individual services of different phases. This group includes a total of six services of 1 G that belong to different phases separately and are planned in one group. Different from full planning, for hybrid optimization of individual services of different phases, an optimization direction of the services is controlled by distinguishing different phases to which the services belong, that is, a service of an earlier phase cannot be placed in a pipe established for a service of a later phase. Finally, it can be obtained that: one service of 1 G of the first phase requires one OCH, and OCH7 of the first phase is generated; one service of I G of the second phase requires one OCH, and OCH8 of the second phase is generated; one service of 1 G of the third phase requires one OCH, and OCH9 of the third phase is generated; one service of 1 G of the fourth phase requires one OCH, and OCH10 of the fourth phase is generated; one service of 1 G of the fifth phase requires one OCH, and OCH11 of the fifth phase is generated; and a service of the sixth phase may be aggregated into the pipe of the previous five phases, and it is not necessary to generate another OCH, that is, the first phase to the fifth phase all require one OCH, and the sixth phase does not require an OCH. A planning result is that: routing of the one remaining service of 1 G in Phase1 is SITE_1-SITE_2, and OCH7 is used; routing of the one remaining service of 1 G in Phase2 is SITE_2-SITE_3, and OCH8 is used; routing of the one remaining service of 1 G in Phase3 is SITE_3-SITE_4, and OCH9 is used; routing of the one remaining service of 1 G in Phase4 is SITE_4-SITE_5, and OCH10 is used; routing of the one remaining service of 1 G in Phase5 is SITE_5-SITE_6, and OCH11 is used; and routing of the one remaining service of 1 G in Phase6 is SITE_6-SITE_5-SITE_4-SITE_3-SITE_2-SITE_1, and OCH7, OCH8, OCH9, OCH10, and OCH11 are used.
The fourth step: Combine the planning result of the second step and the planning result of the third step together, to obtain a final planning result of 11 OCHs, where in each of the first phase to the fifth phase, two OCHs are used, and in the sixth phase, one OCH is used.

The second implementation manner is as follows:
The first step: Group services according to a phase to which each network planning service belongs. It is assumed that each phase belongs to one group and there are six groups in total. A first group includes 11 services whose bandwidths are 1 G of the first phase, a second group includes 11 services whose bandwidths are 1 G of the second phase, a third group includes 11 services whose bandwidths are 1 G of the third phase, a fourth group includes 11 services whose bandwidths are 1 G of the fourth phase, a fifth group includes 11 services whose bandwidths are 1 G of the fifth phase, and a sixth group includes 11 services whose bandwidths are 1 G of the sixth phase.
The second step: Perform Grooming planning on each group of services. 10 services whose bandwidths are 1 G of the first phase in the first group are aggregated together, OCH1 that belongs to the first phase is required, and one individual service of 1 G remains; 10 services whose bandwidths are 1 G of the second phase in the second group are aggregated together, OCH2 that belongs to the second phase is required, and one individual service of 1 G remains; 10 services whose bandwidths are 1 G of the third phase in the third group are aggregated together, OCH3 that belongs to the third phase is required, and one individual service of 1 G remains; 10 services whose bandwidths are 1 G of the fourth phase in the fourth group are aggregated together, OCH4 that belongs to the fourth phase is required, and one individual service of 1 G remains; 10 services whose bandwidths are 1 G of the fifth phase in the fifth group are aggregated together, OCH5 that belongs to the fifth phase is required, and one individual service of 1 G remains; and 10 services whose bandwidths are 1 G of the sixth phase in the sixth group are aggregated together, OCH1 that belongs to the sixth phase is required, and one individual service of 1 G remains. A final planning result is: routing of the 10 services of 1 G in Phase1 is nodes SITE_1-SITE_2, and OCH1 is used; routing of the 10 services of 1 G in Phase2 is SITE_2-SITE_3, and OCH2 is used; routing of the 10 services of 1 G in Phase3 is SITE_3-SITE_4, and OCH3 is used; routing of the 10 services of 1 G in Phase4 is SITE_4-SITE_5, and OCH4 is used; routing of the 10 services of 1 G in Phase5 is SITE_5-SITE_6, and OCH5 is used; routing of the 10 services of 1 G in Phase6 is SITE_6-SITE_1, and OCH6 is used; and one service of 1 G remains in each phase, and one service of 1 G remains in each group.
The third step: Group the remaining individual services of 1 G of each phase in each group into one group, and perform hybrid optimization on the individual services of different phases. This group includes a total of six services of 1 G that belong to different phases separately and are planned in one group. Different from full planning, for hybrid optimization of individual services of different phases, an optimization direction of the services is controlled by distinguishing different phases to which the services belong, that is, a service of an earlier phase cannot be placed in a pipe established for a service of a later phase. Finally, it can be obtained that: one service of 1 G of the first phase requires one OCH, and OCH7 of the first phase is generated; one service of 1 G of the second phase requires one OCH, and OCH8 of the second phase is generated; one service of 1 G of the third phase requires one OCH, and OCH9 of the third phase is generated; one service of 1 G of the fourth phase requires one OCH, and OCH10 of the fourth phase is generated; one service of 1 G of the fifth phase requires one OCH, and OCH11 of the fifth phase is generated; and a service of the sixth phase may be aggregated into the pipe of the previous five phases, and it is not necessary to generate another OCH, that is, the first phase to the fifth phase all require one OCH, and the sixth phase does not require an OCH. A planning result is that: routing of the one remaining service of 1 G in Phase1 is SITE_1-SITE_2, and OCH7 is used; routing of the one remaining service of 1 G in Phase2 is SITE_2-SITE_3, and OCH8 is used; routing of the one remaining service of 1 G in Phase3 is SITE_3-SITE_4, and OCH9 is used; routing of the one remaining service of 1 G in Phase4 is SITE_4-SITE_5, and OCH10 is used; routing of the one remaining service of 1 G in Phase5 is SITE_5-SITE_6, and OCH11 is used; and routing of the one remaining service of 1 G in Phase6 is SITE_6-SITE_5-SITE_4-SITE_3-SITE_2-SITE_1, and OCH7, OCH8, OCH9, OCH10, and OCH11 are used.
The fourth step: Combine the planning result of the second step and the planning result of the third step, to obtain a final planning result of 11 OCHs, where in each of the first phase to the fifth phase, two OCHs are used, and in the sixth phase, one OCH is used.

If full planning is used, because in full planning, a phase to which a service belongs is not considered, and only a minimum total quantity of devices is considered, it is very likely that the first phase requires 11 OCHs, and the other phases have no costs, and costs are concentrated in the first phase. A result of full planning is that routing of one service of 1 G among services of Phase 1 is SITE_1-SITE_2, and routing of the other 10 services of 1 G is SITE_1-SITE_2-SITE_3-SITE_4-SITE_5-SITE_6; routing of services of Phase2 is SITE_2-SITE_3; routing of services of Phase3 is SITE_3-SITE_4; routing of services of Phase4 is SITE_4-SITE_5; routing of services of Phase5 is SITE_5-SITE_6; and routing of services of Phase6 is SITE_6-SITE_1. It can be seen from the result that services of the other phases and services of phase1 are aggregated together, and costs all belong to phase1.

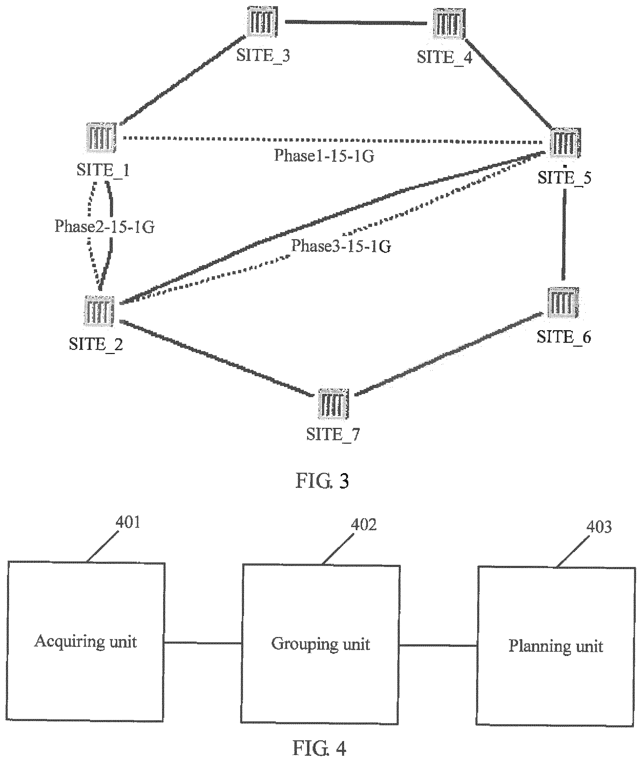

Referring to FIG. 3, FIG. 3 is a schematic diagram of a network planning method according to an embodiment of the present invention. As shown in FIG. 3, FIG. 3 shows a network of seven nodes. The seven nodes are marked as SITE_1, SITE_2, SITE_3, SITE_4, SITE_5, SITE_6, and SITE7 separately. Services of each phase are marked as Phase n separately, for example, services of the first phase are marked as Phase1. There are services of three phases in total in FIG. 3. Services between each two nodes are represented by a dotted line, and are 15 services whose traffic is 1 G. A pipe capacity of an underlying optical channel OCH is 10 G.

The first step: Group services according to a phase to which a service belongs. It is assumed herein that each phase is one group, and there are three groups. A first group includes 15 services whose bandwidths are 1 G of the first phase, a second group includes 15 services whose bandwidths are 1 G of the second phase, and a third group includes 15 services whose bandwidths are 1 G of the third phase.

The second step: Perform planning on each group of services. 10 services whose bandwidths are 1 G of the first phase in the first group are aggregated together, OCH1 of the first phase is required, and five individual services remain; 10 services whose bandwidths are 1 G of the second phase in the second group are aggregated together, OCH1 of the second phase is required, and five individual services remain; and 10 services whose bandwidths are 1 G of the third phase in the third group are aggregated together, OCH1 of the third phase is required, and five individual services remain. For each group, one OCH is obtained, and five individual services of 1 G remain in each group. A planning result is that service routing of the 10 service of 1 G in Phase1 is SITE_1-SITE_2-SITE_5, and OCH1 is used; service routing of the 10 service of 1 G in Phase2 is SITE_1-SITE_2, and OCH2 is used; and service routing of the 10 service of 1 G in Phase3 is SITE_2-SITE_5, and OCH3 is used; meanwhile, five individual services of 1 G remain in each phase.

The third step: Group the five remaining individual services in each group into one group, and perform hybrid optimization on the individual services. In this case, there are a total of 15 individual services, five in each phase, of 1 G in the group. An optimization direction of the services is controlled by distinguishing different phases to which the services belong, that is, a service of an earlier phase cannot be placed in a pipe established for a service of a later phase. It is obtained that the first phase further requires OCH4 of the first phase, the second phase further requires OCH5 of the second phase, the services of the third phase may be aggregated into the services of the first phase and the OCHs of the second phase, and it is not necessary to generate a new OCH. A final planning result is that routing of the five remaining services in Service 1 is SITE_1-SITE_3-SITE_4-SITE_5, and OCH4 is used; routing of the five remaining services in Service 2 is SITE_1-SITE_2, and OCH5 is used; and routing of the five remaining services in Phase3 is SITE_2-SITE_1-SITE_3-SITE_4-SITE_5, and OCH4 and OCH5 are used.

The fourth step: Combine the planning result of the second step and the planning result of the third step together, to obtain a final planning result of five OCHs, where in each of the first phase and the second phase, two OCHs are used, and in the third phase, one OCH is used.

If full planning is used, a result of full planning is also five OCHs. Because a phase to which a service belongs is not considered, costs may be concentrated in the first phase. A result of planning is that routing of 10 services of I G in phase1 is SITE_1-SITE_3-SITE_4-SITE_5, routing of the other five services of 1 G is SITE_1-SITE_2-SITE_5, and services of phase2 and phase3 are aggregated together. Service routing of Phase2 is SITE_1-SITE_2, and service routing of phase3 is SITE_2-SITE_5. In full planning, a phase to which a service belongs is not considered, and only a total quantity of OCHs is considered. In this way, a result is also 11 OCHs, which is an optimal result for full planning.

If phase-by-phase incremental planning is used, a possible optimal result is 6 OCHs. Service routing of Phase1 is SITE_1-SITE_2-SITE_5, and two OCHs are required; service routing of Phase2 is SITE_1-SITE_2, and two OCHs are required; and service routing of phase3 is SITE_2-SITE_5. Because when services of phase1 are planned, services of phase2 and phase3 are not considered, total costs are increased.

This embodiment of the present invention provides a network planning method. The method includes: acquiring information about network planning services of multiple phases, where the information includes a bandwidth of each service of each phase; grouping the network planning services of the multiple phases according to pre-configured grouping information, where the pre-configured grouping information includes information about a group to which a service of each phase belongs, and the services in a same group include services of at least one phase; and performing first-time network traffic grooming planning on each group of network planning services after grouping, grouping remaining network planning services after grooming planning of each group into another group, and performing second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase. In this way, a quantity of obtained OCHs of each phase is more proportional to a quantity of services of each phase, and on condition that the quantity of the OCHs is the same, a later phase to which the OCHs belong indicates lower required costs because a price of a device keeps dropping, thereby reducing actual network establishment costs.

Referring to FIG. 4, FIG. 4 is a structural diagram of a network planning device according to an embodiment of the present invention. As shown in FIG. 4, the device includes the following units:
An acquiring unit 401 is configured to acquire information about network planning services of multiple phases, where the information includes a bandwidth of each service of each phase.

For each network planning service, a time of the service is pre-configured, and services whose configured times are the same are classified into a same phase. Phase is an attribute of each network planning service, and each network planning service belongs to only one phase. The information about the network planning services of the multiple phases includes source nodes and sink nodes (source Node and sink Node), bandwidths of the services, and phases to which the services belong.

A grouping unit 402 is configured to group the network planning services of the multiple phases according to pre-configured grouping information, where the pre-configured grouping information includes information about a group to which a service of each phase belongs, and the services in a same group include services of at least one phase.

Specifically, each service has a phase field, and a value of the field indicates a phase to which the service belongs, that is, a time point at which the service needs to be configured. A grouping basis may be specified by using a configuration file, for example, services of a same phase belong to one group; and may also be changed by using a configuration file to specify which phases belong to one group, for example, it may be specified that services of phase 1 belong to one group, services of phases 2 and 3 belong to one group, and the rest phases belong to one group.

Whether one group includes services of multiple phases is determined by a configuration parameter in the configuration file, that is, which phases are grouped into one group may be configured by using the configuration parameter. For example, for grouping policy 1, services of each phase belong to one group; for grouping policy 2, services of every two phases belong to one group; and for grouping policy 3, the first phase belongs to one group, and the rest phases belong to one group. By controlling grouping by using the parameter, a grooming granularity of an algorithm can be controlled. For example, placing services of all phases in one group according to a grouping policy is actually similar to full planning, and a balancing effect is relatively poor; and if each phase is one group according to a grouping policy, a balancing effect is relatively good, but total costs are relatively high.

A planning unit 403 is configured to perform first-time network traffic grooming planning on each group of network planning services after grouping, group remaining network planning services after grooming planning of each group into another group, and perform second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase.

The network traffic grooming planning refers to performing an operation by aggregating small-granularity services into a big pipe, so as to reduce a quantity of required OCHs and reduce network costs. An optical channel OCH refers to a capacity of a wavelength provided on an optical path. One OCH not only occupies a wavelength resource, but also requires a pair of line boards. Line boards are prime costs of an OTN network device, and therefore, reducing a quantity of OCHs helps reduce network costs. As shown in FIG. 2, it is assumed that there is an optical channel OCH from a node SITE_1 to a node SITE_6, and routing of the optical channel is SITE_1-SITE_2-SITE_3-SITE_4-SITE_5-SITE_6. In the figure, a dotted line represents a service between nodes, and a solid line represents a physical link between nodes. Therefore, establishing an optical channel from SITE_1 to SITE_6 according to the routing information is disposing a pair of line boards at SITE_1 and SITE_6 separately and connecting SITE_1, SITE_2, SITE_3, SITE_4, SITE_5, and SITE_6 separately through cables.

Optionally, the planning unit 402 is specifically configured to:
in a case in which a group of network planning services are services of a same phase, perform grooming planning on the services in the same group; and
in a case in which a group of network planning services are services of different phases, perform grooming planning on services of a same phase separately.

In addition, in an actual application, for the case in which a group of network planning services are services of different phases, end-to-end aggregation may be performed first on services of a same phase in the same group, and then grooming planning is performed on a result of aggregation.

Specifically, refer to descriptions of FIG. 2 and FIG. 3, and no further details are provided herein.

This embodiment of the present invention provides a network planning device. The device acquires information about network planning services of multiple phases, where the information includes a bandwidth of each service of each phase; groups the network planning services of the multiple phases according to pre-configured grouping information, where the pre-configured grouping information includes information about a group to which a service of each phase belongs, and the services in a same group include services of at least one phase; and performs first-time network traffic grooming planning on each group of network planning services after grouping, groups remaining network planning services after grooming planning of each group into another group, and performs second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase. In this way, a quantity of obtained OCHs of each phase is more proportional to a quantity of services of each phase, and on condition that the quantity of the OCHs is the same, a later phase to which the OCHs belong indicates lower required costs because a price of a device keeps dropping, thereby reducing actual network establishment costs.

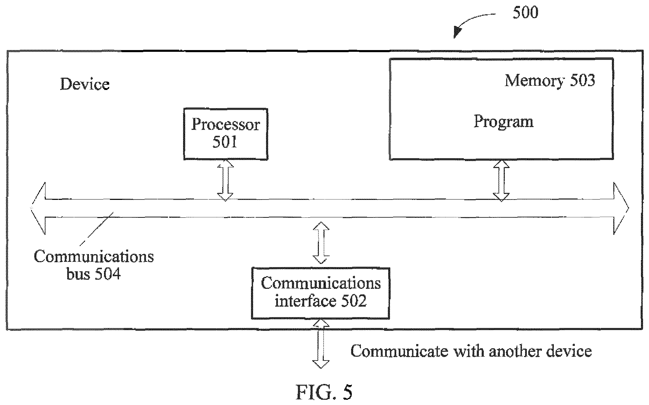

FIG. 5 is a structural diagram of a network planning device according to an embodiment of the present invention. Referring to FIG. 5, FIG. 5 shows a device 500 provided in this embodiment of the present invention. Specific implementation of the device is not limited to this specific embodiment of the present invention. The device 500 includes:
a processor (processor) 501, a communications interface (Communications Interface) 502, a memory (memory) 503, and a bus 504.

The processor 501, the communications interface 502 and the memory 503 communicate with each other by using the bus 504.

The communications interface 502 is configured to communicate with another device.

The processor 501 is configured to execute a program.

Specifically, the program may include program code, and the program code includes computer operation instructions.

The processor 501 may be a central processing unit (central processing unit, CPU), or an application-specific integrated circuit ASIC (Application Specific Integrated Circuit), or one or more integrated circuits that are configured to implement this embodiment of the present invention.

The memory 503 is configured to store a program. The memory 503 may be a volatile memory (volatile memory), for example, a random-access memory (random-access memory, RAM); or a non-volatile memory (non-volatile memory), for example, a read-only memory (ead-only memory, ROM), a flash memory (flash memory), a hard disk drive (hard disk drive, HDD), or a solid-state drive (solid-state drive, SSD). The processor 501 executes, according to program instructions stored in the memory 503, the following method:
acquiring information about network planning services of multiple phases, where the information includes a bandwidth of each service of each phase;
grouping the network planning services of the multiple phases according to pre-configured grouping information, where the pre-configured grouping information includes information about a group to which a service of each phase belongs, and the services in a same group include services of at least one phase; and
performing first-time network traffic grooming planning on each group of network planning services after grouping, grouping remaining network planning services after grooming planning of each group into another group, and performing second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase.

The performing first-time grooming planning on each group of network planning services after grouping includes:
in a case in which a group of network planning services are services of a same phase, performing grooming planning on the services in the same group; and
in a case in which a group of network planning services are services of different phases, performing grooming planning on services of a same phase separately.

The in a case in which a group of network planning services are services of different phases, performing grooming planning on services of a same phase separately includes:
in a case in which a group of network planning services are services of different phases, first performing grooming planning separately on services of a same phase in the same group first;
when a total bandwidth of remaining network planning services in the same group after planning is greater than an integer multiple N of a preset capacity of the OCHs, performing grooming planning again on the remaining network planning services in the same group after planning, and for remaining network planning services that do not exceed the preset capacity of the OCHs, performing the steps of grouping remaining network planning services after grooming planning of each group into another group and performing second-time grooming planning on the remaining network planning services in the another group according to a preset optimization direction; and
when the total bandwidth of the remaining network planning services in the same group after planning is less than the preset capacity of the OCHs, performing the steps of grouping remaining network planning services after grooming planning of each group into another group and performing second-time grooming planning on the remaining network planning services in the another group according to a preset optimization direction.

This embodiment of the present invention provides a network planning device. The device acquires information about network planning services of multiple phases, where the information includes a bandwidth of each service of each phase; groups the network planning services of the multiple phases according to pre-configured grouping information, where the pre-configured grouping information includes information about a group to which a service of each phase belongs, and the services in a same group include services of at least one phase; and performs first-time network traffic grooming planning on each group of network planning services after grouping, groups remaining network planning services after grooming planning of each group into another group, and performs second-time grooming planning on the remaining network planning services in the another group according to a preset optimization direction, to obtain routing information of the services of each phase and information about optical channels OCHs of the network planning services of the multiple phases, where the preset optimization direction is that a network planning service of an earlier phase cannot be placed in an OCH established for a network planning service of a later phase. In this way, a quantity of obtained OCHs of each phase is more proportional to a quantity of services of each phase, and on condition that the quantity of the OCHs is the same, a later phase to which the OCHs belong indicates lower required costs because a price of a device keeps dropping, thereby reducing actual network establishment costs.

The foregoing descriptions are merely preferred implementation manners of the present invention, but are not intended to limit the protection scope of the present invention.

## Claims

1. A network planning method, wherein the method comprises:
acquiring (101) information about network planning services of multiple phases, wherein the information comprises a bandwidth of each service of each phase and wherein services whose configured times are the same are classified into a same phase;
grouping (102) the network planning services of the multiple phases according to pre-configured grouping information, wherein the pre-configured grouping information comprises information about a group to which a service of each phase belongs, and the services of the same phase belong to one group;
performing (103) first-time network traffic grooming planning on each group of network planning services after grouping; and
grouping remaining network planning services after grooming planning of each group into another group, and performing second-time grooming planning on the remaining network planning services in the another group according to a preset optimization direction, to obtain routing information of the services of each phase and information about optical channels OCHs of the network planning services of the multiple phases,
**characterized in that** the preset optimization direction is that a remaining network planning service of an earlier phase cannot be placed in an OCH established for a network planning service of a later phase, and that the performing first-time grooming planning on each group of network planning services after grouping comprises:
in a case in which a group of network planning services are services of a same phase, performing grooming planning on the services in the same group; and
in a case in which a group of network planning services are services of different phases, performing grooming planning on services of a same phase separately.

2. The method according to claim 1, wherein the in a case in which a group of network planning services are services of different phases, performing grooming planning on services of a same phase separately comprises:
in a case in which a group of network planning services are services of different phases, first performing grooming planning separately on services of a same phase in the same group;
when a total bandwidth of remaining network planning services in the same group after planning is greater than an integer multiple N of a preset capacity of the OCHs, performing grooming planning again on the remaining network planning services in the same group after planning, and for remaining network planning services that do not exceed the preset capacity of the OCHs, performing the steps of grouping remaining network planning services after grooming planning of each group into another group and performing second-time grooming planning on the remaining network planning services in the another group according to a preset optimization direction; and
when the total bandwidth of the remaining network planning services in the same group after planning is less than the preset capacity of the OCHs, performing the steps of grouping remaining network planning services after grooming planning of each group into another group and performing second-time grooming planning on the remaining network planning services in the another group according to a preset optimization direction.

3. A network planning device, wherein the device comprises:
an acquiring unit (401), configured to acquire information about network planning services of multiple phases, wherein the information comprises a bandwidth of each service of each phase and wherein services whose configured times are the same are classified into a same phase;
a grouping unit (402), configured to group the network planning services of the multiple phases according to pre-configured grouping information, wherein the pre-configured grouping information comprises information about a group to which a service of each phase belongs, and the services of the same phase belong to one group; and
a planning unit (403), configured to perform first-time network traffic grooming planning on each group of network planning services after grouping, group remaining network planning services after grooming planning of each group into another group, and perform second-time grooming planning on the remaining network planning services in the another group according to a preset optimization direction, to obtain routing information of the services of each phase and information about optical channels OCHs of the network planning services of the multiple phases,
**characterized in that** the preset optimization direction is that a remaining network planning service of an earlier phase cannot be placed in an OCH established for a network planning service of a later phase and that the planning unit is specifically configured to:
in a case in which a group of network planning services are services of a same phase, perform grooming planning on the services in the same group; and
in a case in which a group of network planning services are services of different phases, perform grooming planning on services of a same phase separately.

4. The device according to claim 3, wherein in a case in which a group of network planning services are services of different phases, performing, by the planning unit, grooming planning on services of a same phase separately comprises:
in a case in which a group of network planning services are services of different phases, first performing grooming planning separately on services of a same phase in the same group;
when a total bandwidth of remaining network planning services in the same group after planning is greater than an integer multiple N of a preset capacity of the OCHs, performing grooming planning again on the remaining network planning services in the same group after planning, and for remaining network planning services that do not exceed the preset capacity of the OCHs, performing the steps of grouping remaining network planning services after grooming planning of each group into another group and performing second-time grooming planning on the remaining network planning services in the another group according to a preset optimization direction; and
when the total bandwidth of the remaining network planning services in the same group after planning is less than the preset capacity of the OCHs, performing the steps of grouping remaining network planning services after grooming planning of each group into another group and performing second-time grooming planning on the remaining network planning services in the another group according to a preset optimization direction.

## Patentansprüche

1. Netzplanungsverfahren, wobei das Verfahren Folgendes umfasst:
Erfassen (101) von Informationen über Netzplanungsdienste von mehreren Phasen, wobei die Informationen eine Bandbreite jedes Dienstes jeder Phase umfassen und wobei Dienste, deren konfigurierte Zeiten dieselben sind, in eine gleiche Phase klassifiziert werden;
Gruppieren (102) der Netzplanungsdienste der mehreren Phasen gemäß vorkonfigurierten Gruppierungsinformationen, wobei die vorkonfigurierten Gruppierungsinformationen Informationen über eine Gruppe umfassen, zu der ein Dienst jeder Phase gehört, und die Dienste derselben Phase zu einer Gruppe gehören; Durchführen (103) einer erstmaligen Netzverkehrsvorbereitungsplanung an jeder Gruppe von Netzplanungsdiensten nach dem Gruppieren; und
Gruppieren von restlichen Netzplanungsdiensten nach der Vorbereitungsplanung jeder Gruppe in eine andere Gruppe und Durchführen einer zweitmaligen Vorbereitungsplanung an den restlichen Netzplanungsdiensten in der anderen Gruppe gemäß einer vorgegebenen Optimierungsanweisung, um Leitweglenkungsinformationen der Dienste jeder Phase und Informationen über optische Kanäle OCHs der Netzplanungsdienste der mehreren Phasen zu erhalten, **dadurch gekennzeichnet, dass** die vorgegebene Optimierungsanweisung darin besteht, dass ein restlicher Netzplanungsdienst einer früheren Phase nicht in einen OCH gesetzt werden kann, der für einen Netzplanungsdienst einer späteren Phase erstellt ist, und dass das Durchführen der erstmaligen Vorbereitungsplanung an jeder Gruppe von Netzplanungsdiensten nach dem Gruppieren Folgendes umfasst:
in einem Fall, in dem eine Gruppe von Netzplanungsdiensten Dienste einer gleichen Phase sind, Durchführen einer Vorbereitungsplanung an den Diensten in derselben Gruppe; und
in einem Fall, in dem eine Gruppe von Netzplanungsdiensten Dienste von verschiedenen Phasen sind, separates Durchführen einer Vorbereitungsplanung an Diensten einer gleichen Phase.

2. Verfahren nach Anspruch 1, wobei in einem Fall, in dem eine Gruppe von Netzplanungsdiensten Dienste von verschiedenen Phasen sind, das separate Durchführen einer Vorbereitungsplanung an Diensten einer gleichen Phase Folgendes umfasst:
in einem Fall, in dem eine Gruppe von Netzplanungsdiensten Dienste von verschiedenen Phasen sind, zuerst separates Durchführen einer Vorbereitungsplanung an Diensten einer gleichen Phase in derselben Gruppe;
wenn eine Gesamtbandbreite von restlichen Netzplanungsdiensten in derselben Gruppe nach dem Planen größer ist als ein ganzzahliges Vielfaches N einer vorgegebenen Kapazität der OCHs, erneutes Durchführen einer Vorbereitungsplanung an den restlichen Netzplanungsdiensten in derselben Gruppe nach dem Planen und für restliche Netzplanungsdienste, die nicht die vorgegebene Kapazität der OCHs überschreiten, Durchführen der Schritte des Gruppierens der restlichen Netzplanungsdienste nach der Vorbereitungsplanung jeder Gruppe in eine andere Gruppe und des Durchführens einer zweitmaligen Vorbereitungsplanung an den restlichen Netzplanungsdiensten in der anderen Gruppe gemäß einer vorgegebenen Optimierungsanweisung; und
wenn die Gesamtbandbreite der restlichen Netzplanungsdienste in derselben Gruppe nach dem Planen geringer ist als die vorgegebene Kapazität der OCHs, Durchführen der Schritte des Gruppierens restlicher Netzplanungsdienste nach der Vorbereitungsplanung jeder Gruppe in eine andere Gruppe und des Durchführens einer zweitmaligen Vorbereitungsplanung an den restlichen Netzplanungsdiensten in der anderen Gruppe gemäß einer vorgegebenen Optimierungsanweisung.

3. Netzplanungsvorrichtung, wobei die Vorrichtung Folgendes umfasst:
eine Erfassungseinheit (401), die dazu konfiguriert ist, Informationen über Netzplanungsdienste von mehreren Phasen zu erfassen, wobei die Informationen eine Bandbreite jedes Dienstes jeder Phase umfassen und wobei Dienste, deren konfigurierte Zeiten dieselben sind, in eine gleiche Phase klassifiziert werden;
eine Gruppierungseinheit (402), die dazu konfiguriert ist, die Netzplanungsdienste der mehreren Phasen gemäß vorkonfigurierten Gruppierungsinformationen zu gruppieren, wobei die vorkonfigurierten Gruppierungsinformationen Informationen über eine Gruppe umfassen, zu der ein Dienst jeder Phase gehört, und die Dienste derselben Phase zu einer Gruppe gehören; und
eine Planungseinheit (403), die dazu konfiguriert ist, eine erstmalige Netzverkehrsvorbereitungsplanung an jeder Gruppe von Netzplanungsdiensten nach dem Gruppieren durchzuführen, restliche Netzplanungsdienste nach der Vorbereitungsplanung jeder Gruppe in eine andere Gruppe zu gruppieren, und eine zweitmalige Vorbereitungsplanung an den restlichen Netzplanungsdiensten in der anderen Gruppe gemäß einer vorgegebenen Optimierungsanweisung durchzuführen, um Leitweglenkungsinformationen der Dienste jeder Phase und Informationen über optische Kanäle OCHs der Netzplanungsdienste der mehreren Phasen zu erhalten, **dadurch gekennzeichnet, dass** die vorgegebene Optimierungsanweisung darin besteht, dass ein restlicher Netzplanungsdienst einer früheren Phase nicht in einen OCH gesetzt werden kann, der für einen Netzplanungsdienst einer späteren Phase erstellt ist, und dass die Planungseinheit speziell dazu konfiguriert ist:
in einem Fall, in dem eine Gruppe von Netzplanungsdiensten Dienste einer gleichen Phase sind, eine Vorbereitungsplanung an den Diensten in derselben Gruppe durchzuführen; und
in einem Fall, in dem eine Gruppe von Netzplanungsdiensten Dienste von verschiedenen Phasen sind, eine Vorbereitungsplanung an Diensten einer selben Phase separat durchzuführen.

4. Vorrichtung nach Anspruch 3, wobei in einem Fall, in dem eine Gruppe von Netzplanungsdiensten Dienste von verschiedenen Phasen sind, das separate Durchführen einer Vorbereitungsplanung an Diensten einer gleichen Phase durch die Planungseinheit Folgendes umfasst:
in einem Fall, in dem eine Gruppe von Netzplanungsdiensten Dienste von verschiedenen Phasen sind, zuerst separates Durchführen einer Vorbereitungsplanung an Diensten einer gleichen Phase in derselben Gruppe;
wenn eine Gesamtbandbreite von restlichen Netzplanungsdiensten in derselben Gruppe nach dem Planen größer ist als ein ganzzahliges Vielfaches N einer vorgegebenen Kapazität der OCHs, erneutes Durchführen einer Vorbereitungsplanung an den restlichen Netzplanungsdiensten in derselben Gruppe nach dem Planen und für restliche Netzplanungsdienste, die nicht die vorgegebene Kapazität der OCHs überschreiten, Durchführen der Schritte des Gruppierens restlicher Netzplanungsdienste nach der Vorbereitungsplanung jeder Gruppe in eine andere Gruppe und des Durchführens einer zweitmaligen Vorbereitungsplanung an den restlichen Netzplanungsdiensten in der anderen Gruppe gemäß einer vorgegebenen Optimierungsanweisung; und
wenn die Gesamtbandbreite der restlichen Netzplanungsdienste in derselben Gruppe nach dem Planen geringer ist als die vorgegebene Kapazität der OCHs, Durchführen der Schritte des Gruppierens restlicher Netzplanungsdienste nach der Vorbereitungsplanung jeder Gruppe in eine andere Gruppe und des Durchführens einer zweitmaligen Vorbereitungsplanung an den restlichen Netzplanungsdiensten in der anderen Gruppe gemäß einer vorgegebenen Optimierungsanweisung.

## Revendications

1. Procédé de planification de réseau, le procédé comprenant les étapes consistant à :
acquérir (101) des informations au sujet des services de planification de réseau de phases multiples, les informations contenant une largeur de bande de chaque service de chaque phase, et les services dont les temps configurés sont identiques étant classés dans une même phase ;
regrouper (102) les services de planification de réseau des phases multiples selon des informations de regroupement préalablement configurées, les informations de regroupement préalablement configurées contenant des informations au sujet d'un groupe auquel un service de chaque phase appartient, les services de la même phase appartenant à un groupe unique ;
effectuer (103) une planification de prétraitement de trafic réseau initiale sur chaque groupe de services de planification de réseau après le regroupement ; et
regrouper les services de planification de réseau restants après la planification de prétraitement de chaque groupe dans un autre groupe, et effectuer une deuxième planification de prétraitement sur les services de planification de réseau restants de l'autre groupe selon une directive d'optimisation prédéfinie, afin d'obtenir des informations de routage des services de chaque phase et des informations au sujet des canaux optiques OCH des services de planification de réseau des phases multiples, **caractérisé en ce que** la directive d'optimisation prédéfinie indique qu'un service de planification de réseau restant d'une phase antérieure ne peut pas être placé dans un OCH établi pour un service de planification de réseau d'une phase ultérieure, et que l'exécution d'une planification de prétraitement initiale sur chaque groupe de services de planification de réseau après le regroupement comprend les étapes consistant à :
dans le cas où un groupe de services de planification de réseau est constitué de services d'une même phase, effectuer la planification de prétraitement sur les services du même groupe ; et
dans le cas où un groupe de services de planification de réseau est constitué de services de phases différentes, effectuer la planification de prétraitement sur les services d'une même phase séparément.

2. Procédé selon la revendication 1, dans lequel, dans le cas où un groupe de services de planification de réseau est constitué de services de phases différentes, l'exécution d'une planification de prétraitement sur les services d'une même phase comprend les étapes consistant à :
dans le cas où un groupe de services de planification de réseau est constitué de services de phases différentes, effectuer d'abord une planification de prétraitement séparément sur les services d'une même phase, dans le même groupe ;
lorsqu'une largeur de bande totale des services de planification de réseau restants du même groupe après la planification est supérieure à un multiple entier N d'une capacité prédéfinie des OCH, effectuer à nouveau la planification de prétraitement sur les services de planification de réseau restants du même groupe après la planification, et pour les services de planification de réseau restants qui ne dépassent pas la capacité prédéfinie des OCH, effectuer les étapes du regroupement des services de planification de réseau restants après la planification de prétraitement de chaque groupe dans un autre groupe et effectuer une deuxième planification de prétraitement sur les services de planification de réseau restants de l'autre groupe selon une directive d'optimisation prédéfinie ; et
lorsque la largeur de bande totale des services de planification de réseau restants du même groupe après la planification est inférieure à la capacité prédéfinie des OCH, effectuer les étapes du regroupement des services de planification de réseau restants après la planification de prétraitement de chaque groupe dans un autre groupe et effectuer une deuxième planification de prétraitement sur les services de planification de réseau restants de l'autre groupe selon une directive d'optimisation prédéfinie.

3. Dispositif de planification de réseau, le dispositif comprenant :
une unité d'acquisition (401), conçue pour acquérir des informations au sujet des services de planification de réseau de phases multiples, les informations contenant une largeur de bande de chaque service de chaque phase, et les services dont les temps configurés sont identiques étant classés dans une même phase ;
une unité de regroupement (402), conçue pour regrouper les services de planification de réseau des phases multiples selon des informations de regroupement préalablement configurées, les informations de regroupement préalablement configurées contenant des informations au sujet d'un groupe auquel un service de chaque phase appartient, les services de la même phase appartenant à un groupe unique ; et
une unité de planification (403), conçue pour effectuer une planification de prétraitement de trafic réseau initiale sur chaque groupe de services de planification de réseau après le regroupement, regrouper les services de planification de réseau restants après la planification de prétraitement de chaque groupe dans un autre groupe, et effectuer une deuxième planification de prétraitement sur les services de planification de réseau restants de l'autre groupe selon une directive d'optimisation prédéfinie, afin d'obtenir des informations de routage des services de chaque phase et des informations au sujet des canaux optiques OCH des services de planification de réseau des phases multiples,
**caractérisé en ce que** la directive d'optimisation prédéfinie indique qu'un service de planification de réseau restant d'une phase antérieure ne peut pas être placé dans un OCH établi pour un service de planification de réseau d'une phase ultérieure, et que l'unité de planification est spécifiquement conçue pour :
dans le cas où un groupe de services de planification de réseau est constitué de services d'une même phase, effectuer la planification de prétraitement sur les services du même groupe ; et
dans le cas où un groupe de services de planification de réseau est constitué de services de phases différentes, effectuer la planification de prétraitement sur les services d'une même phase séparément.

4. Dispositif selon la revendication 3, dans lequel, dans le cas où un groupe de services de planification de réseau est constitué de services de phases différentes, l'exécution, par l'unité de planification, d'une planification de prétraitement sur les services d'une même phase séparément comprend les étapes consistant à :
dans le cas où un groupe de services de planification de réseau est constitué de services de phases différentes, effectuer d'abord une planification de prétraitement séparément sur les services d'une même phase, dans le même groupe ;
lorsqu'une largeur de bande totale des services de planification de réseau restants du même groupe après la planification est supérieure à un multiple entier N d'une capacité prédéfinie des OCH, effectuer à nouveau la planification de prétraitement sur les services de planification de réseau restants du même groupe après la planification, et pour les services de planification de réseau restants qui ne dépassent pas la capacité prédéfinie des OCH, effectuer les étapes du regroupement des services de planification de réseau restants après la planification de prétraitement de chaque groupe dans un autre groupe et effectuer une deuxième planification de prétraitement sur les services de planification de réseau restants de l'autre groupe selon une directive d'optimisation prédéfinie ; et
lorsque la largeur de bande totale des services de planification de réseau restants du même groupe après la planification est inférieure à la capacité prédéfinie des OCH, effectuer les étapes du regroupement des services de planification de réseau restants après la planification de prétraitement de chaque groupe dans un autre groupe et effectuer une deuxième planification de prétraitement sur les services de planification de réseau restants de l'autre groupe selon une directive d'optimisation prédéfinie.
